# EUROPEAN PATENT APPLICATION

(11) **EP 2 279 818 A1**
(43) Date of publication of application: **02.02.2011**
(21) Application number: 10425255.6
(22) Date of filing: 28.07.2010
(51) Int. Cl.: B23B 27/10

(54) **Tool for external turning and threading with a conduit for feeding a refrigerant fluid**

(30) Priority: 30.07.2009 IT BS20090025 U
(71) Applicant: Noma di Belleri F.LLI S.n.c., 25060 Marcheno (BS) (IT)
(72) Inventor: Belleri, Lorenzo, 25060 Marcheno (Brescia) (IT)
(74) Representative: Sangiacomo, Fulvia

(57) **Abstract**

This invention concerns a tool for external turning and threading that comprises a tool holder body having a head with seat to which a cutting plate is fixed. A feed conduit (15) is completely provided in the tool holder body (11) and designed to channel a cooling liquid directly towards the cutting area of the tool, starting from a provided small tube connected to the conduit. The feed conduit (15) has an input (16) in one side of the tool holder casing (11) and an output (17) oriented towards the cutting plate.

## Description

This invention concerns in general cutting tools with removal of shaving for machine tools, and refers in particular to a tool for turning and threading with a system for feeding refrigerant fluid on the cutting edge.

The tools for external turning and threading can comprise a tool holder body and, as a cutting edge, an insert or tool bit fixed to the tool holder body. However, in the machining of hard materials and/or at high speed, the cutting zone needs a cooling which is usually attained by a system providing a jet of refrigerant fluid aimed at the cutting edge.

According to a known technique, the jet of refrigerant fluid is supplied towards the cutting edge through an auxiliary conduit placed on the outside of the tool holder body and quite apart from the latter and connected to a fluid source.

But a system of delivering the refrigerant fluid to the cutting edge of a tool by passing through the tool holder body is also well known. However, in the tools for turning and threading, this other system seems to be at least more complex and costly due to the fact that the tool holder body must be provided with an additional removable element in a position behind and raised compared with the cutting edge. Above all, this additional element must be provided with an additional removable element in a position behind and banked compared to the cutting edge to define at least a nozzle facing on the one hand towards the cutting edge and in communication, on the other hand, with the conduit provided in the tool holder body and connectable to a cooling fluid source. Furthermore, the use of the additional element on the tool holder casing requires the interposition of a seal and additional fixing means, usually screws.

The aim of this invention is on the contrary to provide a tool for external turning and threading where the supplying of cooling liquid towards the work area is carried out by intercommunicating conduits provided only and directly in the tool holder body.

This purpose is therefore reached by a tool for turning and external threading **characterized in that** it presents at least a feed conduit fully provided in the tool holder body and designed to channel a cooling liquid directly towards the cutting plate starting from a supplying tube connected to the conduit.

This realization according to the invention does not therefore need any element, seal, screws or other additional means to be provided and has the advantages that the tool becomes more simple, linear and convenient and provides a better evacuation of the shavings, a constancy in cooling the cutting area with evident reduction of risk of shock, greater work precision, better performance and duration of the cutting edge.

The enclosed drawing illustrates an example of a realization of the tool according to the invention, and in particular:
Fig. 1 is a view in perspective from the front of the tool;
Fig. 2 is a view from the side; and
Fig. 3 is a cross section of an enlarged part of the tool in line with the delivery conduit of the cooling liquid.

As shown, the tool comprises a tool holder body 11 with a known configuration and having on a level with its head 12 a seat 13 which a cutting plate 14 is fixed to.

In the tool holder body 11 a feed conduit 15 is provided, designed to deliver a cooling liquid directly towards the cutting plate 14. This feed conduit 15 has an input 16 on a level with one side of the tool holder casing 11 and an outlet 17 on a level with the head 12 of said body 11 and facing towards the cutting plate 14.

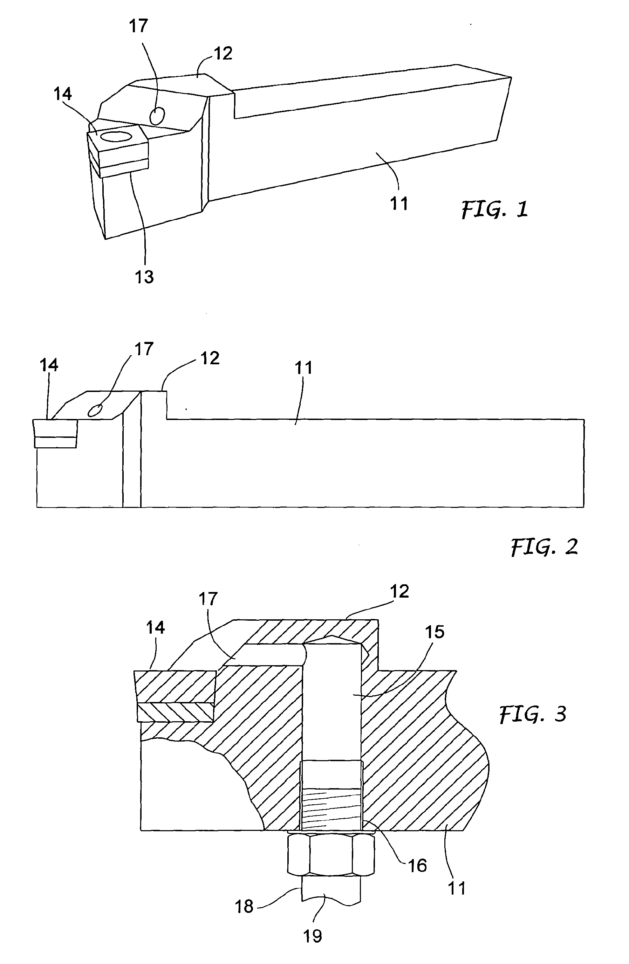

The conduit 15 can be defined by two holes that intersect, and are consequently in communication, provided for in the tool holder body 11 as shown in particular in Fig. 3. The diameter of each of the two holes can be chosen at will depending on the jet of cooling liquid to be delivered towards the cutting plate.

The input 16 of the conduit 15 can be either on a lower side or alongside the tool holder body 11. The input is connected by a nipple, or better an articulated coupling 18, to a tube 19 to deliver the cooling liquid coming from a relative source positioned at a distance. The outlet 17 of said conduit is on a level with the head of the tool holder body and is slightly higher than the cutting tool bit and can be conveniently oriented towards the latter.

In any case, the feed conduit fully extends in the tool holder body and the cooling liquid flows in said conduit from the input to the output without the need of additional elements, thus simplifying the structure of the tool and achieving in full the advantages given above.

## Claims

1. Tool for external turning and threading of the type with a tool holder body having a head with seat to which a cutting plate is fixed, **characterized by** a feed conduit (15) completely provided in the tool holder body (11) and designed to channel a cooling liquid directly towards the cutting area, that is the cutting plate, starting from a supplying tube connected to the conduit.

2. Tool according to claim 1, wherein said feed conduit (15) has an input (16) in one side of the tool holder body (11) and an output (17) on a level with the head (12) of said body and facing towards the cutting plate.

3. Tool according to claims 1 and 2, wherein the input (16) of said conduit (15) is in a lower side or on the side of the tool holder body (11) and wherein, the output (17) is on a level the head of the tool holder body and oriented from above towards the cutting plate.

4. Tool according to the previous claims, wherein said feed conduit (15) can be defined by holes provided in the tool holder body (11) to intersect and become in communication between them, and wherein the diameter of each one of said holes can be either equal or different, depending on where the diameter of each of said holes can be the same or different, depending on the jet of cooling liquid to be delivered towards the cutting plate.

5. Tool according to the previous claims, wherein the tube provided for the cooling liquid is connected to the input of said input of said conduit by means of a nipple or an input of said articulated connector.
